# FASCICULE DE BREVET EUROPEEN

(11) **EP 0 615 692 B1**
(45) Date de publication et mention de la délivrance du brevet: **11.09.1996**
(21) Numéro de dépôt: 93104420.0
(22) Date de dépôt: 18.03.1993
(51) Int. Cl.: A23G 9/02, A23G 9/28, A23G 9/20

(54) **Produit réfrigéré contenant des morceaux de chocolat, procédé et dispositif pour son obtention**
Gekühltes und Schokolade Partikeln enthaltendes Produkt, Verfahren und Vorrichtung dafür
Cooled product containing chocolat bits, process and apparatus for making the same

(43) Date de publication de la demande: 21.09.1994
(73) Titulaire: SOCIETE DES PRODUITS NESTLE S.A., CH-1800 Vevey (CH)
(72) Inventeur: Grassler, Walter, W-8261 Polling (DE); Wild, Manfred, W-8901 Meltingen (DE)
(74) Mandataire: Thomas, Alain

(56) Documents cités:
- EP-A- 0 221 757
- GB-A- 773 404
- GB-A- 1 169 500
- US-A- 2 190 226
- US-A- 2 282 313
- US-A- 2 347 083
- US-A- 2 646 757
- US-A- 2 722 177
- US-A- 4 507 326
- DATABASE WPI Derwent Publications Ltd., London, GB; AN 93-011258

## Description

L'invention concerne un produit réfrigéré, à base de au moins une mousse et contenant des morceaux de chocolat. L'invention concerne en outre le procédé de fabrication de ce produit et le dispositif pour la mise en oeuvre de ce procédé.

Il est déjà connu sur le marché des produits réfrigérés contenant des morceaux de chocolat. Ces types de produits ont cependant une durée de conservation au réfrigérateur de moins de 10 jours: en effet, à partir du moment où l'on disperse dans une mousse traitée par UHT des morceaux de chocolat, le diffusion d'eau de la mousse dans le chocolat crée des problèmes d'ordre microbiologique, car le chocolat n'est pas stérilisé. D'autre part, du fait de la haute teneur de sucre dans le chocolat, la diffusion d'eau casse la texture craquante du chocolat et le consommateur n'a plus aucune sensation de présence de morceaux de chocolat dans la masse.

Le brevet US 2,190,226 concerne un procédé de mélange de crème glacée avec des morceaux de chocolat. D'une part, il ne concerne pas le domaine des produits réfrigérés et d'autre part, il ne permet pas de doser deux produits simultanément.

Le but de la présente invention est de mettre à disposition du consommateur un produit à base de mousse contenant des morceaux de chocolat que l'on peut conserver pendant 5 à 6 semaines au réfrigérateur et dont les morceaux conservent bien leur intégrité pendant ce laps de temps.

L'invention concerne un produit réfrigéré, à base de au moins une mousse, contenant des morceaux de chocolat, dans lequel la mousse contient entre 2 et 10% en poids de chocolat, ledit chocolat étant stérilisé et contenant au moins 50% de graisse, au moins 30% de cacao en poudre et entre 1 et 10% de sucre. Tous les pourcentages sont en poids.

Par mousse dans la présente description, on entend un produit foisonné à base de lait, contenant en outre du sucre, un ingrédient pour le goût (tel que cacao, chocolat ou autre), de la crème et un épaississant ou gélifiant. Par produit foisonné, on entend un produit ayant subi suite au foisonnement une augmentation de volume comprise entre 80 et 120%. Il faut cependant noter que ces limites ne sont pas critiques.

Il est possible selon l'invention d'obtenir un produit de plus longue conservation car le chocolat utilisé a été stérilisé, la mousse étant traitée par UHT avant le foisonnement. Ce traitement n'est possible qu'en raison de la faible teneur en sucre du chocolat. Le sucre utilisé dans le chocolat est soit du saccharose, soit du sucre inverti, soit du sucre de fruit, tel que du glucose. Le produit réfrigéré selon l'invention contient normalement dans un gobelet, deux mousses différentes, lesquelles contiennent chacune des morceaux de chocolat dans les proportions indiquées ci-dessus. On peut également envisager un produit réfrigéré à base de deux mousses, l'une seulement contenant des morceaux de chocolat. On peut prévoir aussi une couche de surface à base de crème, par exemple à base de crème fouettée.

Le chocolat utilisé consiste s'agissant de la graisse en du beurre de cacao. Les morceaux de chocolat ont une dimension comprise en moyenne entre 1 et 4 mm et ils sont bien répartis dans la masse de mousse.

Le produit se conserve au réfrigérateur à une température comprise entre 4 et 8°C. On peut finalement envisager un produit réfrigéré avec une seule mousse contenant les morceaux de chocolat mentionnés plus haut. Si on a un produit réfrigéré à deux mousses, on peut avoir soit un remplissage vertical, soit un remplissage en couches horizontales.

L'invention concerne en outre le procédé de fabrication du produit réfrigéré mentionné ci-dessus, dans lequel on stérilise le chocolat et on traite séparément par UHT le produit à base de lait qu'on foisonne ensuite pour en faire une mousse, on amène de manière concomitante sur une buse d'injection un ruban ou des morceaux de chocolat sensiblement au milieu du flux de mousse, on découpe et mélange le chocolat dans la masse de mousse et on effectue le remplissage de la mousse seule ou en combinaison avec une seconde mousse à l'aide d'un doseur rotatif.

On stérilise la masse de chocolat normalement dans une cuve à une température comprise entre 110 et 130°C pendant 10 à 30 min. Le mélange pour la mousse est traitée par UHT c'est-à-dire à une température de 130-150°C pendant 5-40 sec et on opère le foisonnement pour obtenir une augmentation de volume (overrun) comprise entre 80 et 120%.

Il faut bien sûr amener le chocolat sur la buse d'injection à l'état liquide, c'est-à-dire à une température comprise entre 25 et 30°C.

La mousse est amenée sur cette buse à une température comprise entre 8 et 12°C. Lorsqu'on a joint les deux flux, il faut laisser le temps au ruban de chocolat de se solidifier. Il faut donc compter avant la découpe du ruban de chocolat une durée de contact comprise entre 30 et 60 sec.
Dans le mode de réalisation du ruban de chocolat, il faut amener ledit ruban et la mousse sur la buse d'injection de manière à ce qu'ils arrivent à la même vitesse, à savoir une vitesse comprise entre 0,05 et 0,15 m/s.

Le débit d'arrivée de mousse et de chocolat n'est par critique et dépend de la production souhaitée.

Dans le second mode de réalisation du procédé, on injecte directement sur la buse des morceaux de chocolat. On peut arriver à ce résultat par exemple avec un système de dosage alternatif, dans lequel on arrive avec deux lignes munies chacune de vanne, chacune des lignes délivrant alternativement à une cadence très élevée les morceaux de chocolat dans le flux de mousse.

La découpe du ruban de chocolat se fait de manière à ce que les morceaux de chocolat aient une dimension moyenne comprise entre 1 et 4 mm.

On arrive ensuite avec la mousse contenant les morceaux dans une cuve qui alimente un doseur volumétrique qui remplit directement le gobelet disposé en dessus dans le cas du remplissage avec une seule mousse. Si on remplit le gobelet avec deux mousses, l'une contenant des morceaux et l'autre n'en contenant pas, on arrive à partir d'un doseur volumétrique pour chaque mousse à alimenter un doseur rotatif qui délivre alors de manière concomitante les deux mousses dans le gobelet.

L'invention concerne finalement le dispositif pour la mise en oeuvre du procédé décrit ci-dessus, comprenant d'une part, une première ligne de préparation de mousse-UHT, une ligne de stérilisation de chocolat, une buse d'injection opérant la jonction des deux lignes précitées, un système de découpe pour le ruban de chocolat et un doseur volumétrique et d'autre part, une seconde ligne de préparation de mousse UHT avec un second doseur volumétrique, ainsi qu'une buse rotative alimentée par les deux doseurs volumétriques précités.

La ligne de préparation de mousse opère de manière continue avec un système de foisonnement avant la buse d'injection. La ligne de stérilisation de chocolat opère en discontinu et consiste en une cuve munie d'une enveloppe chauffante pour la stérilisation. A la sortie de la cuve, on dispose d'une pompe amenant le flux de chocolat vers la buse sous une pression comprise entre 2,5 et 3,5 bar.

La buse d'injection est l'élément important du dispositif. Elle comprend un conduit d'arrivée pour le ruban de chocolat et deux conduits d'arrivée pour la mousse disposés symétriquement par rapport au conduit d'arrivée du ruban de chocolat.

La section du conduit d'arrivée de chocolat dépend de la pression d'arrivée du chocolat, du foisonnement de la mousse et du pourcentage de chocolat souhaité dans la mousse. Cette section est normalement comprise entre 5 et 15% de la section totale du flux de mousse.

Comme déjà mentionné plus haut à propos du procédé il faut que le flux de chocolat et de mousse restent en contact avant la découpe du ruban de chocolat. La distance qui sépare la buse d'injection du système de découpe est compris entre 5 et 8 m. Cette distance permet bien au ruban de chocolat d'arriver à une température de l'ordre de 12°C.

Le système de découpe du ruban de chocolat consiste en une enceinte dans laquelle est disposée un arbre rotatif. entraîné par un moteur, comportant plusieurs couteaux. En aval des couteaux, on prévoit sur l'arbre rotatif des pales pour favoriser le mélange de la mousse avec les morceaux de chocolat.

On a ensuite sur la ligne de fabrication une cuve de retenue reliée à un doseur volumétrique, lui-même raccordée à une buse rotative, connue en soi et utilisée dans le secteur des surgelés et des glaces.

La ligne de fabrication est soit du type aseptique, soit du type hautement hygiénique.

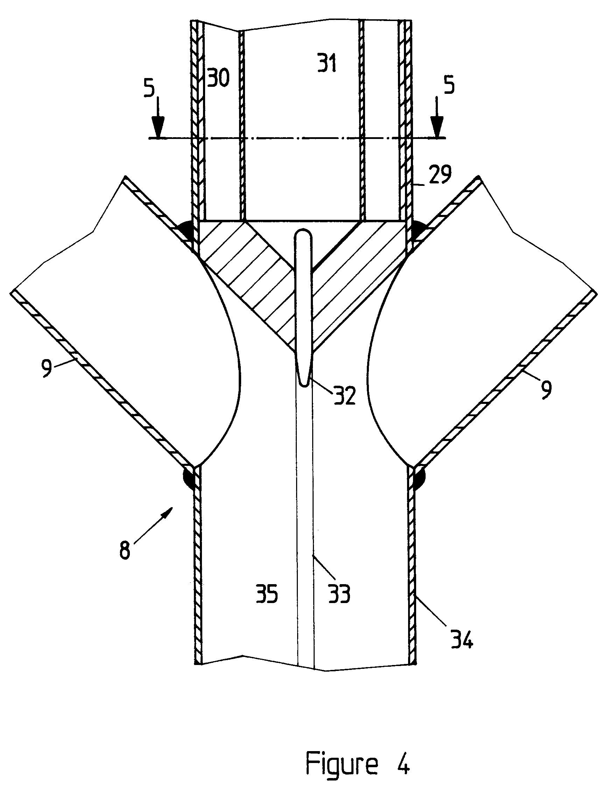

La suite de la description est faite en référence aux dessins, sur lesquels:
**Figure 1**
   est une vue de côté du produit réfrigéré selon l'invention,
**Figure 2**
   est une vue de dessus du même produit,
**Figure 3**
   est une représentation schématique de la ligne de fabrication selon l'invention,
**Figure 4**
   est une représentation schématique de la buse d'injection pour obtenir un ruban de chocolat,
**Figure 5**
   est une coupe selon la ligne 5-5 de la Figure 4,
**Figure 6**
   est une représentation schématique de la buse d'injection pour obtenir des morceaux de chocolat,
**Figure 7**
   est une représentation schématique selon la Figure 6, mais à 90° par rapport à celle-ci.
**Figure 8**
   est une représentation schématique du système de découpe du chocolat,

Le produit selon l'invention, conditionné dans un gobelet (1) est constitué par une mousse (2) et une mousse (3) contenant des morceaux de chocolat (4). On peut prévoir un poids total de 60 g, c'est-à-dire 15 g par zone. Le remplissage avec le doseur rotatif donne un aspect en forme de spirale. On peut par exemple envisager une mousse (3) au chocolat noir avec des morceaux de chocolat et une mousse (2) au café ou au chocolat blanc.

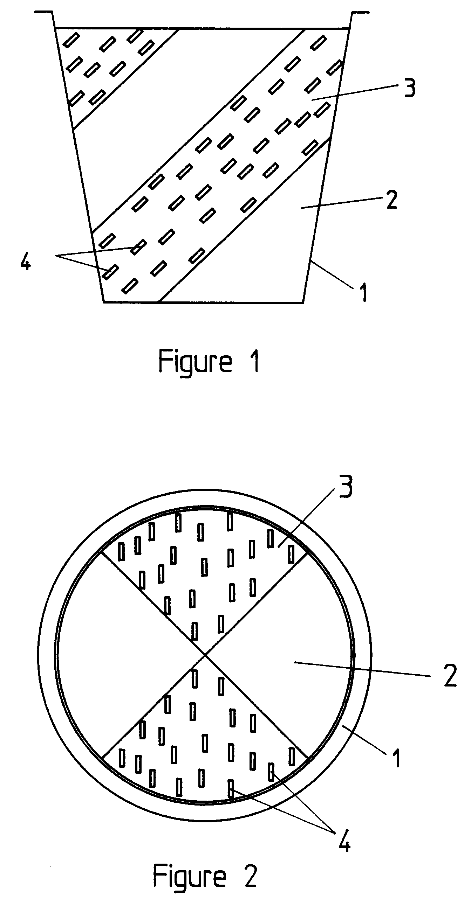

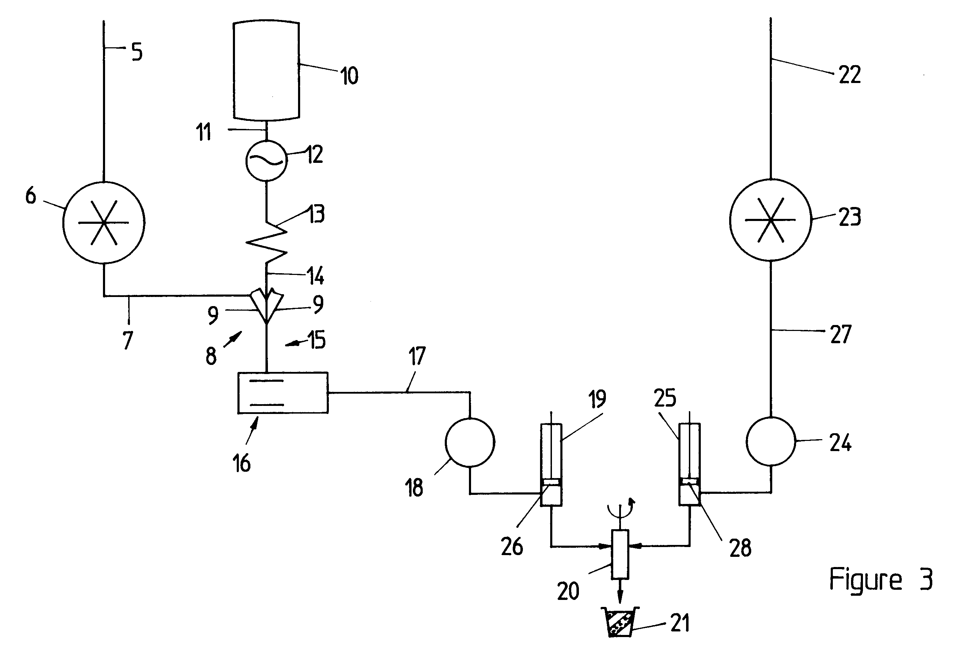

En référence à la Fig. 3, on fait arriver par la conduite (5) le mélange à base de lait traité par UHT qu'on prévoit comme phase mousse (3). On foisonne ce mélange dans le dispositif (6) avec l'azote (ou autre gaz neutre) de manière à obtenir une augmentation de volume de 120%.

On amène cette mousse par la conduite (7) sur la buse d'injection (8) comportant deux conduits d'arrivée (9) symétriques.

La cuve (10) est prévue pour y stériliser le chocolat. Lorsqu'il est stérilisé, il passe par la conduite (11) et est amené par la pompe (12) sur un système de refroidissement (13) de manière à porter le chocolat à environ 30°C. Il passe ensuite suivant (14) sur la buse d'injection (8).

Il est prévu ensuite une zone de contact (15) sous forme de tube cylindrique permettant au ruban de chocolat de prendre en masse dans le flux de mousse. Le système de découpe (16) coupe le ruban de chocolat et le mélange mousse et morceaux de chocolat est amené par la conduite (17) dans une cuve (18), d'où il est chargé dans un doseur volumétrique (19) comportant un piston (26).

De manière symétrique, on prépare la mousse (2) à partir de la conduite (22) amenant le mélange à base de lait traité UHT sur le dispositif de foisonnement (23). Par la conduite (27), la mousse arrive dans une cuve (24) d'oû elle est chargée dans le doseur volumétrique (25) comportant un piston (28).

Les doseurs (19) et (25) dosent alors les mousses respectives dans la buse rotative (20), qui permet le remplissage du gobelet (21).

La buse d'injection, le dispositif de découpe et le doseur rotatif seront décrits plus en détail en référence aux figures suivantes.

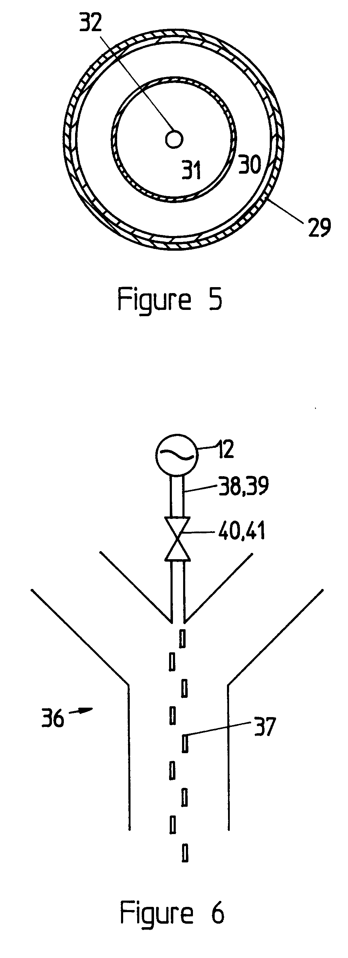

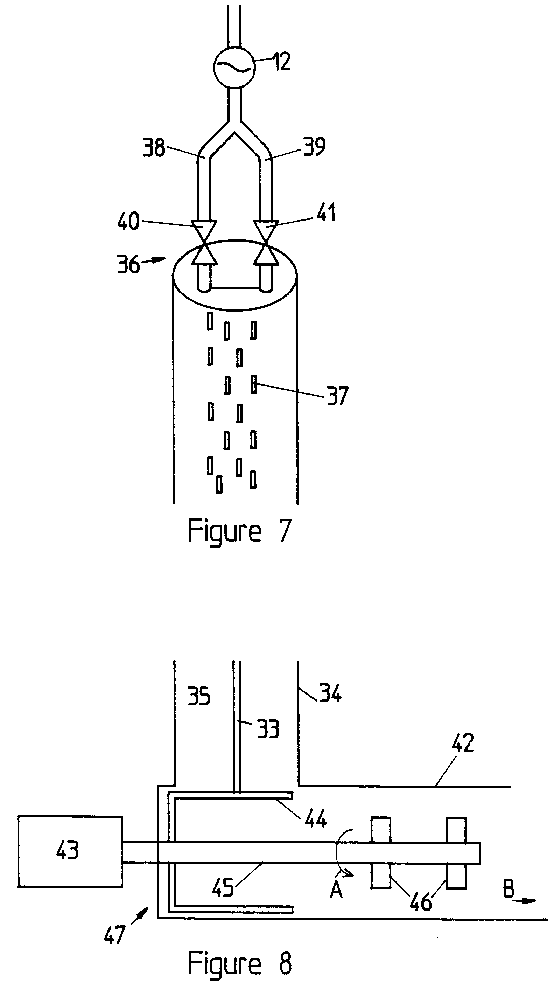

Les figures 4 et 5 montrent la buse d'injection (8) utilisée dans le dispositif de la figure 3. Cette buse comprend deux conduits d'amenée (9) de la mousse et un conduit (29) d'amenée du chocolat qui comprend une enveloppe chauffante (30) pour bien maintenir le chocolat à l'état liquide et la conduite (31) de transport proprement dite du chocolat. Le chocolat passe à travers la fente (32) ayant une forme ronde ou oblongue et forme un ruban (33) dans la masse de mousse (35). Comme déjà mentionné plus haut, la conduite (34) a une longueur comprise entre 5 et 8 m.

Les figures 6 et 7 donnent une forme de réalisation de la buse d'injection (36) pour obtenir directement des morceaux de chocolat (37). On sépare le flux d'arrivée de chocolat après la pompe (12) de manière à avoir deux flux (38, 39) et les vannes (40) et (41) sont alternativement ouvertes et fermées avec une fréquence de l'ordre de la milli-seconde. On obtient ainsi directement des morceaux de chocolat ayant la dimension souhaitée, c'est-à-dire de 1 à 4 mm.

La figure 8 montre le système de découpe utilisé dans le dispositif selon la figure 3. Par la conduite (34), la mousse (35) entourant le ruban de chocolat (33) arrive sur le système de découpe (47). Celui-ci comprend dans une enceinte (42) un arbre rotatif (45) mu par un moteur (43), ledit arbre portant des couteaux (44) et des pales mélangeuses (46). L'arbre tourne selon la flèche A et le produit mélangé coule selon (B) vers la cuve (18). On prévoit normalement sur l'arbre 6 couteaux (44).

La suite de la description est faite en référence aux exemples.

### Exemple produit

Le produit réfrigéré selon l'invention est avec une seule mousse au chocolat noir obtenu à partir de 65% (en poids) de lait écrémé, 14% de sucre, 7% de chocolat, 3% de poudre de cacao, 5% de crème et des épaississants connus. La mousse représente 94% et les morceaux de chocolat 6%.

Le chocolat est fabriqué à partir de 68% de beurre de cacao, 30% de poudre de cacao et 2% de sucre.

### Exemple procédé

On prépare le chocolat avec la composition ci-dessus par stérilisation à 125°C pendant 15 min.

La mousse est préparée avec les ingrédients de l'exemple précédent. Le mélange est traité thermiquement à 130°C pendant 120 sec puis refroidi à 80°C. On le foisonne avec de l'azote à 7 bar pour obtenir un overrun de 120%.

La mousse est amenée à 8°C sur la buse d'injection à un débit de 500 kg/h. Le chocolat est dosé à 40 kg/h à une température de 30°C. Le système de découpe tourne à 200 t/min et le remplissage est effectué dans des conditions parfaitement hygiéniques à raison de 120 gobelets à la minute.

## Revendications

1. Produit réfrigéré, à base de au moins une mousse consistant en un produit foisonné à base de lait et contenant des morceaux de chocolat, caractérisé en ce que la mousse (3) contient entre 2 et 10% en poids de chocolat (4), ledit chocolat étant stérilisé et contenant au moins 50% de graisse, au moins 30% de cacao en poudre et entre 1 et 10% de sucre.

2. Produit réfrigéré selon la revendication 1, caractérisé en ce qu'il est à base de deux mousses, chacune contenant des morceaux de chocolat.

3. Produit réfrigéré selon la revendication 1, caractérisé en ce qu'il est à base de deux mousses (2,3), l'une seulement (3) contenant des morceaux de chocolat.

4. Produit réfrigéré selon l'une des revendications 1 à 3, caractérisé en ce que le chocolat contient entre 1 et 3% de sucre.

5. Produit réfrigéré selon l'une quelconque des revendications 1 à 4, caractérisé en ce que les morceaux de chocolat ont une dimension comprise entre 1 et 4 mm.

6. Produit selon l'une quelconque des revendications 1 à 5, caractérisé en ce que la mousse présente une augmentation de volume dû au foisonnement compris entre 80 et 120%.

7. Produit réfrigéré selon l'une des revendications 1 à 6. caractérisé en ce qu'il comprend une couche de surface à base de crème.

8. Procédé pour la préparation d'un produit réfrigéré selon l'une quelconque des revendications 1 à 7, caractérisé en ce qu'on stérilise le chocolat et on traite séparément par UHT le produit à base de lait qu'on foisonne ensuite pour en faire une mousse, on amène de manière concomitante sur une buse d'injection (8) un ruban (33) ou de morceaux de chocolat (37) sensiblement au milieu du flux de mousse (35), on découpe et mélange le chocolat dans la masse de mousse et on effectue le remplissage de la mousse seule ou en combinaison avec une seconde mousse à l'aide d'une buse rotative (20).

9. Procédé selon la revendication 8, caractérisé en ce qu'on amène le ruban (33) ou les morceaux de chocolat (37) à une température comprise entre 25 et 30°C et la mousse (35) à une température comprise entre 8 et 12°C sur la buse d'injection (8).

10. Procédé selon l'une des revendications 8 ou 9, caractérisé en ce que, dans le cas du ruban de chocolat (33), on amène ledit ruban et la mousse sur la buse d'injection de manière à ce qu'ils arrivent à la même vitesse, à savoir à une vitesse comprise entre 0,05 et 0,15 m/s.

11. Procédé selon l'une des revendications 8 ou 9, caractérisé en ce que dans le cas de morceaux de chocolat (37), on les obtient à l'aide d'un système de dosage alternatif (40, 41) au niveau de la buse d'injection (8).

12. Procédé selon la revendication 10, caractérisé en ce qu'on découpe le ruban de chocolat (33) de manière à obtenir des morceaux ayant une dimension comprise entre 1 et 4 mm.

13. Procédé selon l'une des revendications 8 à 13, caractérisé en ce qu'on laisse le ruban de chocolat (33) ou les morceaux de chocolat (37) au contact de la mousse pendant une durée comprise entre 30 et 60 sec avant la découpe dudit ruban.

14. Dispositif pour la mise en oeuvre du procédé selon l'une des revendications 8 à 13, comprenant d'une part une première ligne de préparation de mousse-UHT (6), une ligne de stérilisation de chocolat (10), une buse d'injection (8) opérant la jonction des deux lignes précitées, un système de découpe (16) pour le ruban de chocolat et un doseur volumétrique (19) et d'autre part, une seconde ligne de préparation de mousse-UHT (23) avec un second doseur volumétrique (25), ainsi qu'une buse rotative (20) alimentée par les deux doseurs volumétriques précités.

15. Dispositif selon la revendication 14, caractérisé en ce que la buse d'injection (8) comprend un conduit d'arrivée (31) pour le ruban de chocolat et deux conduits d'arrivée (9) pour la mousse disposés symétriquement par rapport au conduit d'arrivée du ruban de chocolat.

16. Dispositif selon l'une des revendications 14 ou 15, caractérisé en ce que la distance séparant la buse d'injection (8) du système de découpe (16) est compris entre 5 et 8 m.

17. Dispositif selon l'une des revendications 14 à 16, caractérisé en ce que le système de découpe (16) est un arbre rotatif (45) comportant plusieurs couteaux (44).

## Claims

1. Refrigerated product, based on at least one mousse consisting of an overrun milk-based product containing pieces of chocolate, characterized in that the mousse (3) contains between 2 and 10 % by weight of chocolate (4), the said chocolate being sterilized and containing at least 50 % of fats, at least 30 % of cocoa powder and between 1 and 10 % of sugar.

2. Refrigerated product according to claim 1, characterized in that it is based on two mousses, each containing pieces of chocolate.

3. Refrigerated product according to claim 1, characterized in that it is based on two mousses (2,3), of which only one (3) contains pieces of chocolate.

4. Refrigerated product according to one of claims 1 to 3, characterized in that the chocolate contains between 1 and 3 % of sugar.

5. Refrigerated product according to any one of claims 1 to 4, characterized in that the pieces of chocolate are from 1 to 4 mm in size.

6. Refrigerated product according to any one of claims 1 to 5, characterized in that the mousse shows an increase in volume through overrunning of between 80 and 120 %.

7. Refrigerated product according to one of claims 1 to 6, characterized in that it comprises a surface layer based on cream.

8. Process for the preparation of a refrigerated product according to any one of claims 1 to 7, characterized in that the chocolate is sterilized and the milk-based product is separately treated by UHT which is then overrun to produce a mousse from it, a strand (33) or pieces (37) of chocolate are simultaneously delivered to an injection nozzle (8) substantially in the middle of the stream of mousse, the chocolate is cut and mixed with the mass of mousse and the mousse is introduced into containers on its own or in combination with a second mousse by means of a rotary metering head (20).

9. Process according to claim 8, characterized in that the strand (33) or pieces (37) of chocolate are delivered to the injection nozzle (8) at a temperature of between 25 and 30°C and the mousse (35) is delivered at a temperature of between 8 and 12°C.

10. Process according to claim 8 or claim 9, characterized in that, in the case of the strand of chocolate (33), the said strand and the mousse are delivered to the injection nozzle in such a way that they arrive at the same rate, i.e. at a rate of between 0.05 and 0.15 m/s.

11. Process according to claim 8 or 9, characterized in that in the case of pieces of chocolate (37), these are obtained with the aid of an alternative metering system (40,41) at the injection nozzle (8).

12. Process according to claim 10, characterized in that the strand of chocolate (33) is cut so as to obtain pieces between 1 and 4 mm in size.

13. Process according to one of claims 8 to 13, characterized in that the strand of chocolate (33) or the pieces of chocolate (37) is/are left in contact with the mousse for a period of between 30 and 60 seconds before the said strand is cut.

14. Device for carrying out the process according to one of claims 8 to 13, comprising on the one hand a first line for preparing UHT mousse (6), a chocolate sterilization line (10), an injection nozzle (8) joining the two aforementioned lines, a system (16) for cutting the strand of chocolate and a volumetric metering device (19) and on the other hand, a second line for preparing UHT mousse (23) with a second volumetric metering device (25), as well as a rotary nozzle (20) supplied by the two aforementioned metering devices.

15. Device according to claim 14, characterized in that the injection nozzle (8) comprises a feed passage (31) for the strand of chocolate and two feed passages (9) for the mousse arranged symmetrically in relation to the feed passage for the strand of chocolate.

16. Device according to claim 14 or claim 15, characterized in that the distance separating the injection nozzle (8) from the cutting system (16) is between 5 and 8 metres.

17. Device according to one of claims 14 to 16, characterized in that the cutting system (16) is a rotary shaft (45) having several knives (44).

## Patentansprüche

1. Kühlprodukt auf der Basis von mindestens einem Schaum, der aus einem expandierten Produkt auf Milchbasis besteht und Schokoladestücke enthält, dadurch gekennzeichnet, daß der Schaum (3) 2 bis 10 Gew.-% Schokolade (4) enthält, die sterilisiert ist und mindestens 50 % Fett, mindestens 30 % Kakaopulver und 1 bis 10 % Zucker enthält.

2. Kühlprodukt nach Anspruch 1, dadurch gekennzeichnet, daß es auf der Basis von zwei Schäumen ist, deren jeder Schokoladestücke enthält.

3. Kühlprodukt nach Anspruch 1, dadurch gekennzeichnet, daß es auf der Basis von zwei Schäumen (2, 3) ist, von denen nur einer (3) Schokoladestücke enthält.

4. Kühlprodukt nach einem der Ansprüche 1 bis 3, dadurch gekennzeichnet, daß die Schokolade 1 bis 3 % Zucker enthält.

5. Kühlprodukt nach einem der Ansprüche 1 bis 4, dadurch gekennzeichnet, daß die Schokoladestücke eine Größe von 1 bis 4 mm haben.

6. Produkt nach einem der Ansprüche 1 bis 5, dadurch gekennzeichnet, daß der Schaum eine durch das Aufschäumen bewirkte Volumensvergrößerung von 80 bis 120 % hat.

7. Kühlprodukt nach einem der Ansprüche 1 bis 6, dadurch gekennzeichnet, daß es eine Oberflächenschicht auf Sahnebasis aufweist.

8. Verfahren zur Herstellung eines Kühlprodukts nach einem der Ansprüche 1 bis 7, dadurch gekennzeichnet, daß man die Schokolade sterilisiert und das Produkt auf Milchbasis getrennt einer UHT-Behandlung unterzieht, worauf man es zur Herstellung eines Schaums expandiert, man gleichzeitig über eine Einspritzdüse (8) ein Schokoladeband (33) oder Schokoladestücke (37) im wesentlichen in die Mitte des Schaumstroms (35) bringt, man die Schokolade in der Schaummasse zerschneidet und mischt und die Abfüllung des Schaums allein oder in Kombination mit einem zweiten Schaum mit Hilfe einer rotierenden Düse (20) vornimmt.

9. Verfahren nach Anspruch 8, dadurch gekennzeichnet, daß man das Schokoladeband (33) oder die Schokoladestücke (37) auf eine Temperatur von 25 bis 30 °C und den Schaum (35) auf eine Temperatur von 8 bis 12°C an der Einspritzdüse (8) bringt.

10. Verfahren nach einem der Ansprüche 8 oder 9, dadurch gekennzeichnet, daß man im Fall des Schokoladebandes (33) dieses Band und den Schaum so der Einspritzdüse zuführt, daß sie mit derselben Geschwindigkeit ankommen, und zwar mit einer Geschwindigkeit von 0,05 bis 0,15 m/s.

11. Verfahren nach einem der Ansprüche 8 oder 9, dadurch gekennzeichnet, daß im Fall von Schokoladestücken (37) man diese mit Hilfe eines abwechselnd arbeitenden Dosiersystems (40, 41) in Höhe der Einspritzdüse (8) erhält.

12. Verfahren nach Anspruch 10, dadurch gekennzeichnet, daß man das Schokoladeband (33) so zerschneidet, daß man Stücke mit einer Größe von 1 bis 4 mm erhält.

13. Verfahren nach einem der Ansprüche 8 bis 13, dadurch gekennzeichnet, daß man das Schokoladeband (33) oder die Schokoladestücke (37) während einer Zeit von 30 bis 60 s vor dem Zerschneiden des Bandes mit dem Schaum in Kontakt beläßt.

14. Vorrichtung zur Durchführung des Verfahrens nach einem der Ansprüche 8 bis 13, umfassend einerseits eine erste Schaumherstellungs-UHT-Strecke (6), eine Strecke (10) zur Schockoladesterilisierung, eine Einspritzdüse (8), die die Vereinigung der beiden genannten Strecken vornimmt, ein Schneidsystem (16) für das Schokoladeband und eine Volumendosiereinrichtung (19) und andererseits eine zweite Schaumherstellungs-UHT-Strecke (23) mit einer zweiten Volumendosiereinrichtung (25) sowie eine rotierende Düse (20), die durch die beiden genannten Volumendosiereinrichtungen gespeist ist.

15. Vorrichtung nach Anspruch 14, dadurch gekennzeichnet, daß die Einspritzdüse (8) eine Zutrittsleitung (31) für das Schokoladeband und zwei Zutrittsleitungen (9) für den Schaum aufweist, die bezüglich der Zutrittsleitung des Schokoladebands symmetrisch angeordnet sind.

16. Vorrichtung nach einem der Ansprüche 14 oder 15, dadurch gekennzeichnet, daß der Abstand zwischen der Einspritzdüse (8) und dem Schneidsystem (16) 5 bis 8 m beträgt.

17. Vorrichtung nach einem der Ansprüche 14 bis 16, dadurch gekennzeichnet, daß das Schneidsystem (16) eine mehrere Messer (44) aufweisende rotierende Welle (45) ist.
